# EUROPEAN PATENT SPECIFICATION

(11) **EP 4 399 361 B1**
(45) Date of publication and mention of the grant of the patent: **16.04.2025**
(21) Application number: 22769627.5
(22) Date of filing: 26.08.2022
(51) Int. Cl.: D05C 17/02, D06N 7/00, D06N 5/00, D04H 1/541, D04H 3/147, D04H 3/153, D04H 11/00, B32B 5/02, B32B 5/26, D01D 5/34, D01F 8/00

(54) **MATERIAL FOR A PRIMARY CARPET BACKING**
MATERIAL FÜR EINE PRIMÄRE TEPPICHUNTERLAGE
MATÉRIAU POUR DOS DE TAPIS PRIMAIRE

(30) Priority: 07.09.2021 EP 21195329
(43) Date of publication of application: 17.07.2024
(73) Proprietor: Freudenberg Performance Materials B.V., 6827 AV Arnhem (NL)
(72) Inventor: KLOMPARENDS, Jan, 6666 CB Heteren (NL); GUNZENHAEUSER, Magnus, 67434 Neustadt an der Weinstraße (DE); VAN DEN HOVEN, Eric, 5242 CM Rosmalen (NL); GOETTEL, Matthias, 67659 Kaiserslautern (DE)
(74) Representative: CPW GmbH
(86) International application number: PCT/EP2022/073779
(87) International publication number: WO 2023/036625

(56) References cited:
- EP-A1- 3 009 553
- WO-A1-2011/069996

## Description

The invention pertains to a material for a primary carpet backing, in particular for tufted carpets, and in particular for carpet tiles, to methods for manufacturing the material for a primary carpet backing, to tufted carpets comprising the material for a primary carpet backing, and to carpet tiles comprising the material for a primary carpet backing and/or the tufted carpet.

EP 3009553 A1 discloses a primary carpet backing comprising at least one nonwoven layer manufactured from bicomponent core/sheath fibers comprising a polyamide polymer in the core and a polymer obtained by polymerization of an olefin having a terminal or a non-terminal double bond in the sheath.

Although the primary carpet backing of EP 3009553 A1 may facilitate chemical recycling of tufted carpets, in particular when the pile yarns in the tufted carpet are formed of a polyamide, the processing stability of such a primary carpet backing may not always be sufficient in the manufacturing process of tufted carpets.

WO 2011/069996 A1 discloses a primary carpet backing material comprising at least two different layers of fibers.

There thus remains a desire to provide a material for a primary carpet backing having sufficient processing stability, both at 22° and at 100° after being wetted, which also enables chemical recycling of tufted carpets comprising the material for a primary carpet backing.

It is therefore an object of the invention to provide material for a primary carpet backing having sufficient processing stability while facilitating recycling of the tufted carpet comprising the material for a primary carpet backing.

The object of the invention is achieved by the material according to any of claims 1 to 11.

The material for a primary carpet backing comprising a nonwoven fabric comprising first bicomponent core/sheath fibers comprising a first thermoplastic polymer in the core and a second thermoplastic polymer in the sheath and second bicomponent core/sheath fibers comprising a third thermoplastic polymer in the core and a fourth thermoplastic polymer in the sheath, wherein the first thermoplastic polymer in the core of the first bicomponent core/sheath fibers is of a different polymer family as the third thermoplastic polymer in the core of the second bicomponent core/sheath fibers, and wherein the second thermoplastic polymer in the sheath of the first bicomponent core/sheath fibers and the fourth thermoplastic polymer in the sheath of the second bicomponent core/sheath fibers are polymers of the same polymer family, enables to provide a primary carpet backing having sufficient processing stability while facilitating recycling of the tufted carpet comprising the material for a primary carpet backing.

The core of the first bicomponent core/sheath fibers comprises at least 75 wt. %, preferably at least 85 wt.%, more preferably at least 90 wt.%, of one or more thermoplastic polymer(s) based on the total weight of the core, but may comprise up to 25 wt.%, preferably up to 20 wt.%, more preferably up to 15 wt.%, even more preferably up to 10 wt.%, most preferably up to 5 wt.% based on the total weight of the core, commonly used additives, such as for example spinning auxiliaries, fillers, flame retardant materials, UV inhibitors, crystallization retarders/accelerators, plasticizers, heat stabilizers, antimicrobial additives, antistatic agents, colouring agents or any combination thereof.

The core of the first bicomponent core/sheath fibers comprises the first thermoplastic polymer as a major component, wherein the term major component is understood to mean that the core of the first bicomponent core/sheath fibers comprises more than 50 wt.% of the first thermoplastic polymer, preferably at least 75 wt.%, more preferably at least 90 wt.%, more preferably at least 95 wt.% of the first thermoplastic polymer. The core of the first bicomponent core/sheath fibers may consist of the first thermoplastic polymer, and optionally the commonly used additives.

The core of the second bicomponent core/sheath fibers comprises at least 75 wt.%, preferably at least 85 wt.%, more preferably at least 90 wt.%, of one or more thermoplastic polymer(s) based on the total weight of the core, but may comprise up to 25 wt.%, preferably up to 20 wt.%, more preferably up to 15 wt.%, even more preferably up to 10 wt.%, most preferably up to 5 wt.% based on the total weight of the core, commonly used additives, such as for example spinning auxiliaries, fillers, flame retardant materials, UV inhibitors, crystallization retarders/accelerators, plasticizers, heat stabilizers, antimicrobial additives, antistatic agents, colouring agents or any combination thereof.

The core of the second bicomponent core/sheath fibers comprises the third thermoplastic polymer as a major component, wherein the term major component is understood to mean that the core of the second bicomponent core/sheath fibers comprises more than 50 wt.% of the third thermoplastic polymer, preferably at least 75 wt.%, more preferably at least 90 wt.%, more preferably at least 95 wt. % of the third thermoplastic polymer. The core of the second bicomponent core/sheath fibers may consist of the third thermoplastic polymer, and optionally the commonly used additives.

The sheath of the first bicomponent core/sheath fibers comprises at least 75 wt.%, preferably at least 85 wt.%, more preferably at least 90 wt.%, of one or more thermoplastic polymer(s) based on the total weight of the sheath, but may comprise up to 25 wt.%, preferably up to 20 wt.%, more preferably up to 15 wt. %, even more preferably up to 10 wt.%, most preferably up to 5 wt.% based on the total weight of the core, commonly used additives, such as for example spinning auxiliaries, fillers, flame retardant materials, UV inhibitors, crystallization retarders/accelerators, plasticizers, heat stabilizers, antimicrobial additives, antistatic agents, colouring agents or any combination thereof.

The sheath of the first bicomponent core/sheath fibers comprises the second thermoplastic polymer as a major component, wherein the term major component is understood to mean that the sheath of the second bicomponent core/sheath fibers comprises more than 50 wt.% of the second thermoplastic polymer, preferably at least 75 wt.%, more preferably at least 90 wt.%, more preferably at least 95 wt.% of the second thermoplastic polymer. The sheath of the first bicomponent core/sheath fibers may consist of the second thermoplastic polymer, and optionally the commonly used additives.

The sheath of the second bicomponent core/sheath fibers comprises at least 75 wt.%, preferably at least 85 wt.%, more preferably at least 90 wt.%, of one or more thermoplastic polymer(s) based on the total weight of the sheath, but may comprise up to 25 wt.%, preferably up to 20 wt.%, more preferably up to 15 wt. %, even more preferably up to 10 wt.%, most preferably up to 5 wt.% based on the total weight of the core, commonly used additives, such as for example spinning auxiliaries, fillers, flame retardant materials, UV inhibitors, crystallization retarders/accelerators, plasticizers, heat stabilizers, antimicrobial additives, antistatic agents, colouring agents or any combination thereof.

The sheath of the second bicomponent core/sheath fibers comprises the fourth thermoplastic polymer as a major component, wherein the term major component is understood to mean that the sheath of the second bicomponent core/sheath fibers comprises more than 50 wt.% of the fourth thermoplastic polymer, preferably at least 75 wt.%, more preferably at least 90 wt.%, more preferably at least 95 wt.% of the fourth thermoplastic polymer. The sheath of the second bicomponent core/sheath fibers may consist of the fourth thermoplastic polymer, and optionally the commonly used additives.

The term polymer of the same polymer family is understood to mean that monomers comprised in a certain polymer and monomers comprised in a further polymer are connected by the same type of chemical bond, as is well known to the person skilled in the art. For example, when in a first polymer two monomers are connected by an ester unit, i.e. an ester-bond, and in a second polymer two monomers are connected by an ester-bond, the first polymer and the second polymer are members of the polyester polymer family. When, for example, in a first polymer two monomers are connected by an amide unit, i.e. an amide-bond, and in a second polymer two monomers are connected by an amide-bond, the first polymer and the second polymer are members of the polyamide polymer family.

Preferably, at least 50% of the chemical bonds between monomers in the second thermoplastic polymer in the sheath of the first bicomponent core/sheath fibers and at least 50% of the chemical bonds between monomers in the fourth thermoplastic polymer in the sheath of the second bicomponent core/sheath fibers are the same chemical bonds. More preferably, at least 75% of the chemical bonds between monomers in the second thermoplastic polymer in the sheath of the first bicomponent core/sheath fibers and at least 75% of the chemical bonds between monomers in the fourth thermoplastic polymer in the sheath of the second bicomponent core/sheath fibers are the same chemical bonds. More preferably, at least 90% of the chemical bonds between monomers in the second thermoplastic polymer in the sheath of the first bicomponent core/sheath fibers and at least 90% of the chemical bonds between monomers in the fourth thermoplastic polymer in the sheath of the second bicomponent core/sheath fibers are the same chemical bonds. Even more preferably, at least 95% of the chemical bonds between monomers in the second thermoplastic polymer in the sheath of the first bicomponent core/sheath fibers and at least 95% of the chemical bonds between monomers in the fourth thermoplastic polymer in the sheath of the second bicomponent core/sheath fibers are the same chemical bonds. Most preferably, at least 98% of the chemical bonds between monomers in the second thermoplastic polymer in the sheath of the first bicomponent core/sheath fibers and at least 98% of the chemical bonds between monomers in the fourth thermoplastic polymer in the sheath of the second bicomponent core/sheath fibers are the same chemical bonds.

The second thermoplastic polymer in the sheath of the first bicomponent core/sheath fibers may have essentially the same melting temperature as the fourth thermoplastic polymer in the sheath of the second bicomponent core/sheath fibers. The term essentially the same melting temperature is understood to mean that the melting temperature of the fourth thermoplastic polymer in the sheath of the second bicomponent core/sheath fibers does not deviate more than 10°C from the melting temperature of the second thermoplastic polymer in the sheath of the first bicomponent core/sheath fibers. Preferably, the melting temperature of the fourth thermoplastic polymer does not deviate more than 5°C, more preferably not more than 3°C, most preferably not more than 1°C, from the melting temperature of the second thermoplastic polymer. The second thermoplastic polymer in the sheath of the first bicomponent core/sheath fibers having essentially the same melting temperature as the fourth thermoplastic polymer in the sheath of the second bicomponent core/sheath fibers enables that the material for a primary carpet backing may be thermally bonded at a temperature above the melting temperature of the second thermoplastic polymer, thereby forming bonding points at the contact points between fibers without the risk that the fourth thermoplastic polymer does not contribute to the formation of bonding points at the contact points between fibers, which could be the case when the fourth thermoplastic polymer would have a significantly higher melting temperature than the second thermoplastic polymer, or vice-versa. Furthermore, undesired degradation of the fourth thermoplastic polymer in the sheath of the second bicomponent core/sheath fibers during thermal bonding is prevented, or at least reduced, which could be the case when the fourth thermoplastic polymer would have a significantly lower melting temperature than the second thermoplastic polymer, or vice-versa.

In an embodiment, the fourth thermoplastic polymer in the sheath of the second bicomponent core/sheath fibers has an identical melting temperature as the second thermoplastic polymer in the sheath of the first bicomponent core/sheath fibers, wherein the term identical melting temperature is understood to mean that the melting temperature of the fourth thermoplastic polymer deviates less than 1°C, preferably less than 0.5°C, from the melting temperature of the second thermoplastic polymer.

The second thermoplastic polymer in the sheath of the first bicomponent core/sheath fibers and the fourth thermoplastic polymer in the sheath of the second bicomponent core/sheath fibers may be identical polymers, thereby reducing the number of raw materials required for manufacturing the material for a primary carpet backing.

The weight ratio of the core of the first bicomponent core/sheath fibers to the sheath of the first bicomponent core/sheath fibers may be varied from 90:10 to 40:60, but preferably ranges between 85:15 to 45:55, more preferably between 80:20 to 60:40.

The weight ratio of the core of the second bicomponent core/sheath fibers to the sheath of the second bicomponent core/sheath fibers may be varied from 90:10 to 40:60, but preferably ranges between 85:15 to 45:55, more preferably between 80:20 to 60:40.

In the material for a primary carpet backing the first bicomponent core/sheath fibers may exhibit any cross-sectional shape. Preferably, the cross-sectional shape of the first bicomponent core/sheath fibers is round or elliptical. However, the cross-sectional shape of the first bicomponent core/sheath fibers may also be triangular, rectangular or multilobal, like bilobal or trilobal.

In the material for a primary carpet backing the second bicomponent core/sheath fibers may exhibit any cross-sectional shape. Preferably, the cross-sectional shape of the second bicomponent core/sheath fibers is round or elliptical. However, the cross-sectional shape of the second bicomponent core/sheath fibers may also be triangular, rectangular or multilobal, like bilobal or trilobal.

Selection of a certain cross-sectional shape for the first bicomponent core/sheath fibers and/or the second bicomponent core/sheath fibers allows to fine-tune the bonding strength between the first bicomponent core/sheath fibers and/or the second bicomponent core/sheath fibers, and enables to improve friction between the material for a primary carpet backing and the pile yarns.

Within the scope of the present invention, it is understood that the term fibers refers to both staple fibers and filaments. Staple fibers are fibers which have a specified, relatively short length in the range of 2 to 200 mm. Filaments are fibers having a length of more than 200 mm, preferably more than 500 mm, more preferably more than 1000 mm. Filaments may even be virtually endless, for example when formed by continuous extrusion and spinning of a filament through a spinning hole in a spinneret. Preferably, the first bicomponent core/sheath fibers comprised in the nonwoven fabric of the materials for a primary carpet backing are filaments and/or the second bicomponent core/sheath fibers comprised in the nonwoven fabric of the materials for a primary carpet backing are filaments to further improve the breaking strength and/or tear strength of the material for a primary carpet backing and/or of the tufted carpet and/or the carpet tile.

In the material for a primary carpet backing the linear density of the first bicomponent core/sheath fibers may vary, but preferably the linear density of the first bicomponent core/sheath fibers ranges from 1 dtex to 25 dtex, more preferably in the range of 2 to 20 dtex, most preferably in the range of 5 to 15 dtex. The linear density of the fibers is expressed as dtex, which is the weight of a fiber in gram per 10,000 meter length.

In the material for a primary carpet backing the linear density of the second bicomponent core/sheath fibers may vary, but preferably the linear density of the second bicomponent core/sheath fibers ranges from 1 dtex to 25 dtex, more preferably in the range of 2 to 20 dtex, most preferably in the range of 5 to 15 dtex.

The material for a primary carpet backing comprising a nonwoven fabric comprising first bicomponent core/sheath fibers having these preferred linear density ranges and/or second bicomponent core/sheath fibers having these preferred linear density ranges enables to provide a primary backing having a minimum level of processing stability as well as a minimum stitch holding capacity, i.e. a capability to hold the tufts in place, during tufting of the primary carpet backing.

The material for a primary carpet backing may comprise first bicomponent core/sheath fibers having a mixture of different linear densities, and/or may comprise second bicomponent core/sheath fibers having a mixture of different linear densities.

The nonwoven fabric comprised in the material for a primary carpet backing may in principle be any type of nonwoven, such as for example staple fiber nonwovens produced by well-known processes, such as carding processes, wet-laid processes or air-laid processes, or any combination thereof. The nonwoven fabric comprised in the material for a primary carpet backing, however, preferably is a nonwoven fabric composed of filaments produced by known spunbonding processes wherein filaments are extruded from a spinneret and subsequently laid down on a conveyor belt as a web of filaments and subsequently consolidated, also known as bonding, the web to form a nonwoven fabric, or by a two-step process wherein filaments are spun and wound on bobbins, preferably in the form of multifilament yarns, followed by the step of unwinding the filaments or multifilament yarns and laying the filaments down on a conveyor belt as a web of filaments and consolidating the web to form a nonwoven fabric.

The nonwoven fabric comprised in the material for a primary carpet backing may be consolidated by any suitable known consolidation technology, including mechanical consolidation, for example by stitching, mechanical needling and/or hydrodynamic consolidation by fluid jets, in particular by hydroentanglement, by chemical consolidation, for example by applying a binder dispersion or a binder solution to the web, which is generally dried and optionally cured, and/or by thermal consolidation, for example by calendaring, ultrasonic bonding and/or hot air bonding. Preferably, the nonwoven fabric comprised in the material for a primary carpet backing is consolidated by thermal consolidation, more preferably by hot air bonding.

In an embodiment, the second thermoplastic polymer in the sheath of the first bicomponent core/sheath fibers is a polyamide and the fourth thermoplastic polymer is a polyamide.

The melting temperature of the polyamide may vary, but preferably the melting temperature of the polyamides range from 180°C to 300°C, more preferably from 200°C to 270°C, most preferably from 215°C to 230°C.

The polyamide comprised as the second thermoplastic polymer in the sheath of the first bicomponent core/sheath fibers and the polyamide comprised as the fourth thermoplastic polymer in the sheath of the second bicomponent core/sheath fibers may each be a polyamide or a co-polyamide independently selected, and is preferably selected from the group consisting of a polyamide-6, a recycled polyamide-6, a bio-based polyamide-6, i.e. a polyamide-6 polymerized from monomers obtained from renewable sources, and copolymers and/or blends thereof. Selecting a recycled polyamide-6, and/or a bio-based polyamide-6 further enables to manufacture the material for a primary backing in a more sustainable manner.

In an embodiment, the second thermoplastic polymer in the sheath of the first bicomponent core/sheath fibers is a polyamide-6, and the fourth thermoplastic polymer in the sheath of the second bicomponent core/sheath fibers is a polyamide-6.

In an embodiment, the second thermoplastic polymer in the sheath of the first bicomponent core/sheath fibers is a polyolefin, and the fourth thermoplastic polymer in the sheath of the second bicomponent core/sheath fibers is a polyolefin.

The melting temperature of the polyolefin may vary, but preferably the melting temperature of the polyolefins range from 80°C to 200°C, more preferably from 100°C to 180°C, most preferably from 150°C to 170°C.

The polyolefin comprised as the second thermoplastic polymer in the sheath of the first bicomponent core/sheath fibers and the polyolefin comprised as the fourth thermoplastic polymer in the sheath of the second bicomponent core/sheath fibers may each be a polyolefin independently selected from the group consisting of a polyethylene, a polypropylene, such as for example an isotactic polypropylene, an syndiotactic polypropylene or an atactic polypropylene, and copolymers and/or blends thereof.

In an embodiment, the second thermoplastic polymer in the sheath of the first bicomponent core/sheath fibers is a polypropylene, and the fourth thermoplastic polymer in the sheath of the second bicomponent core/sheath fibers is a polypropylene.

In an embodiment, the first thermoplastic polymer in the core of the first bicomponent core/sheath fibers is a polyester, and the third thermoplastic polymer in the core of the second bicomponent core/sheath fibers is a polyamide.

The polyester in the core of the first bicomponent core/sheath fibers may be a recycled polyester, preferably a recycled polyethylene terephthalate, to enable to manufacture the material for a primary backing in a more sustainable manner.

In an embodiment, the first thermoplastic polymer in the core of the first bicomponent core/sheath fibers is a polyester, and the third thermoplastic polymer in the core of the second bicomponent core/sheath fibers is a polyamide, in particular when the second thermoplastic polymer in the sheath of the first bicomponent core/sheath fibers is a polyolefin and the fourth thermoplastic polymer in the sheath of the second bicomponent core/sheath fibers is a polyolefin. It has been observed, when the second thermoplastic polymer in the sheath of the first bicomponent core/sheath fibers is a polyamide, in particular a polyamide-6, and the fourth thermoplastic polymer in the sheath of the second bicomponent core/sheath fibers is a polyamide, in particular a polyamide-6, and when the first thermoplastic polymer in the core of the first bicomponent core/sheath fibers is a polyester, preferably a polyethylene terephthalate, that the stability of the tufted carpet and in particular of carpet tiles is improved as compared to the dimensional stability of the tufted carpet and in particular of carpet tiles consisting of bicomponent core/sheath fibers having a core consisting of a polyamide and a sheath consisting of a polyolefin.

In a preferred embodiment, the first thermoplastic polymer in the core of the first bicomponent core/sheath fibers is a polyester, preferably a polyethylene terephthalate, and the third thermoplastic polymer in the core of the second bicomponent core/sheath fibers is a polyamide-6, and preferably the second thermoplastic polymer in the sheath of the first bicomponent core/sheath fibers is a polypropylene and preferably the fourth thermoplastic polymer in the sheath of the second bicomponent core/sheath fibers is a polypropylene to enable that the tufted carpet comprising the material for a primary carpet backing and/or the carpet tiles comprising the material for a primary carpet backing and/or the tufted carpet may be chemically recycled in a process including the steps of depolymerisation of the polyamide-6 into its constituent monomers and repolymerization into polyamide-6, in particular when the pile yarns in the tufted carpet comprise or consist of polyamide-6. In the chemical recycling process polyamides can be depolymerized into their monomers, which in turn can be used - without a costly separation procedure to remove undesired monomers - to synthesize a new polyamide. The first thermoplastic polymer being a polyester, preferably a polyethylene terephthalate, enables to provide sufficient processing stability and/or dimensional stability to the tufted carpet, in particular to carpet tiles comprising the material for a primary carpet backing.

In an embodiment the first thermoplastic polymer is a polyester, preferably a polyethylene terephthalate, and the third thermoplastic polymer is a polyolefin, such as a polypropylene or a polymethylpentene, preferably a polypropylene.

In an embodiment the first thermoplastic polymer is a polyester, and the third thermoplastic polymer is a polyolefin, in particular when the second thermoplastic polymer in the sheath of the first bicomponent core/sheath fibers is a polyamide and the fourth thermoplastic polymer in the sheath of the second bicomponent core/sheath fibers is a polyamide.

In a preferred embodiment, the first thermoplastic polymer is a polyethylene terephthalate, and the third thermoplastic polymer is a polyolefin, preferably a polypropylene or a polymethylpentene, and preferably the second thermoplastic polymer in the sheath of the first bicomponent core/sheath fibers is a polyamide, in particular polyamide-6, and preferably the fourth thermoplastic polymer in the sheath of the second bicomponent core/sheath fibers is a polyamide, in particular a polyamide-6. The first thermoplastic polymer being a polyester, preferably a polyethylene terephthalate, enables to provide sufficient processing stability and/or dimensional stability to the tufted carpet, in particular to carpet tiles comprising the material for a primary carpet backing, while the polyamide, and in particular the polyamide-6, comprised in the sheath of the first bicomponent core/sheath fibers and comprised in the sheath of the second bicomponent core/sheath fibers enable that the tufted carpet comprising the material for a primary carpet backing and/or the carpet tiles comprising the material for a primary carpet backing and/or the tufted carpet may be chemically recycled in a process including the step of depolymerisation of the polyamide-6 into its constituent monomers and the step of repolymerization of the monomers into polyamide-6, in particular when the pile yarns in the tufted carpet comprise polyamide-6. The third thermoplastic polymer comprised in the core of the second bicomponent core/sheath fibers being a polyolefin enables to manufacture the material for a primary carpet backing in a more economical manner, while still enabling chemical recycling of the tufted carpet and/or the carpet tiles and while still providing sufficient processing stability to the material for a carpet backing.

The material for a primary carpet backing may comprise one or more layers of fibers comprising a mixture, preferably a homogeneous mixture, of the first bicomponent core/sheath fibers and the second bicomponent core/sheath fibers, enabling to prevent, or at least reduce, delamination between the layers of fibers of the material for a primary carpet backing.

The material for a primary carpet backing may comprise a first layer of fibers comprising first bicomponent core/sheath fibers and a second layer of fibers comprising second bicomponent core/sheath fibers to improve the processing stability of the material for a primary carpet backing. The first layer of fibers preferably consists of first bicomponent core/sheath fibers. The second layer of fibers preferably consists of second bicomponent core/sheath fibers.

The material for a primary carpet backing may further comprise a third layer of fibers comprising first bicomponent core/sheath fibers and/or a fourth layer of fibers comprising second bicomponent core/sheath fibers. The third layer of fibers preferably consists of first bicomponent core/sheath fibers. The fourth layer of fibers preferably consists of second bicomponent core/sheath fibers.

The third layer of fibers comprising first bicomponent core/sheath fibers may be located directly adjacent, and preferably plane parallel, to the first layer of fibers comprising first bicomponent core/sheath fibers, enabling the material for a primary carpet backing to have improved processing stability.

The fourth layer of fibers comprising second bicomponent core/sheath fibers may be located directly adjacent, and preferably plane parallel, to the second layer of fibers comprising second bicomponent core/sheath fibers.

In an embodiment, the fourth layer of fibers comprising second bicomponent core/sheath fibers is located directly adjacent, and preferably plane parallel, to the third layer of fibers comprising first bicomponent core/sheath fibers, the third layer of fibers comprising first bicomponent core/sheath fibers is located directly adjacent, and preferably plane parallel, to the second layer of fibers comprising second bicomponent core/sheath fibers, and the second layer of fibers comprising second bicomponent core/sheath fibers is located directly adjacent, and preferably plane parallel, to the first layer of fibers comprising first bicomponent core/sheath fibers.

In an embodiment, the second layer of fibers comprising second bicomponent core/sheath fibers and/or the fourth layer of fibers comprising second bicomponent core/sheath fibers is/are located between the first layer of fibers comprising first bicomponent core/sheath fibers and the third layer of fibers comprising first bicomponent core/sheath fibers to prevent or at least reduce dishing or doming of the carpet tiles due to differences shrinkage effects and/or expansion effects between the individual layers.

In a preferred embodiment, the first layer of fibers comprising first bicomponent core/sheath fibers and/or the third layer of fibers comprising first bicomponent core/sheath fibers is/are located between the second layer of fibers comprising second bicomponent core/sheath fibers and the fourth layer of fibers comprising second bicomponent core/sheath fibers to prevent or at least reduce dishing or doming of the carpet tiles due to differences shrinkage effects and/or expansion effects between the individual layers, while enabling the material for a primary carpet backing to have improved processing stability.

The third layer of fibers and/or the fourth layer of fibers may consist of a mixture, preferably a homogeneous mixture, of the first bicomponent core/sheath fibers and the second bicomponent core/sheath fibers, enabling to improve the delamination strength between the layers of fibers of the material for a primary carpet backing.

The nonwoven fabric comprised in the material for a primary carpet backing may have a weight of 30 g/m² to 250 g/m², preferably a weight of 40 g/m² to 200 g/m², more preferably 50 g/m² to 150 g/m², more preferably 60 g/m² to 140 g/m², more preferably 65 g/m² to 125 g/m², most preferably 70 g/m² to 120 g/m².

The material for a primary carpet backing may comprise a reinforcement layer, preferably a scrim, to further improve the processing stability of such a primary carpet backing, both at 22°C and at 100°C after being wetted.

The scrim may be a laid scrim or a woven scrim. As is well known to the person skilled in the art, a scrim, no matter whether laid or woven, is an open lattice structure composed of at least two sets of parallel threads, wherein the first group of parallel threads is oriented at an angle, generally at a 90° angle, to the second group of parallel threads. The first group of parallel threads may be connected to the second group of parallel threads by chemical bonding to form a laid scrim or the first group of parallel threads may be interwoven with the second group of parallel threads to form a woven scrim. In an embodiment, the openings in the scrim have at least one dimension in the plane of the scrim being at least 1 mm, preferably at least 2 mm, more preferably 5 mm.

Preferably, the material for a primary backing comprises at most 45 wt.% of polyester based on the total weight of the material for a primary carpet backing, more preferably the material for a primary backing comprises at most 40 wt. % of polyester based on the total weight of the material for a primary carpet backing.

The object of the invention can further be achieved with a tufted carpet comprising the material for a primary carpet backing according to any of the embodiments described above and pile yarns fixedly connected to the primary backing.

The pile yarns comprise at least 75 wt.%, preferably at least 85 wt.%, more preferably at least 90 wt.%, of one or more thermoplastic polymer(s) based on the total weight of the pile yarns, but may comprise up to 25 wt.%, preferably up to 20 wt.%, more preferably up to 15 wt.%, even more preferably up to 10 wt.%, most preferably up to 5 wt.% based on the total weight of the core, commonly used additives, such as for example spinning auxiliaries, fillers, flame retardant materials, UV inhibitors, crystallization retarders/accelerators, plasticizers, heat stabilizers, antimicrobial additives, antistatic agents, colouring agents or any combination thereof.

The pile yarns fixedly connected to the primary backing may comprise any suitable polyamide, preferably a polyamide-6. Preferably, the pile yarns comprise a polyamide, most preferably a polyamide-6, as a major component, wherein the term major component is understood to mean that the pile yarns comprise more than 50 wt.% of the polyamide, preferably at least 75 wt.%, more preferably at least 90 wt.%, more preferably at least 95 wt.% of the polyamide, to enable that the tufted carpet comprising the material for a primary carpet backing and/or the carpet tiles comprising the tufted carpet may be efficiently chemically recycled in a process including the step of depolymerisation of the polyamide-6 into its constituent monomers and the step of repolymerization of the monomers into polyamide-6.

The tufted carpet may comprise a material for a primary carpet backing wherein the second thermoplastic polymer in the sheath of the first bicomponent core/sheath fibers is a polyamide, preferably a polyamide-6, and the fourth thermoplastic polymer is a polyamide, preferably a polyamide-6, and may comprise pile yarns fixedly connected to the primary backing, wherein the pile yarns comprise a polyamide, preferably a polyamide-6, enabling to provide increased tuft bind strength, according to ISO 4919, in the tufted carpet by create a thermal bond between the pile yarns and the material for a primary carpet backing, for example by applying a process as disclosed in EP1598476 or WO2012/076348.

The tufted carpet may comprise a reinforcement layer, preferably a scrim, to further improve the dimensional stability of the tufted carpet. The reinforcement layer may be comprised in the material for a primary carpet backing, or may be comprised in the tufted carpet located below the primary carpet backing and the pile yarns.

The scrim may be a laid scrim or a woven scrim. As is well known to the person skilled in the art, a scrim, no matter whether laid or woven, is an open lattice structure composed of at least two sets of parallel threads, wherein the first group of parallel threads is oriented at an angle, generally at a 90° angle, to the second group of parallel threads. The first group of parallel threads may be connected to the second group of parallel threads by chemical bonding to form a laid scrim or the first group of parallel threads may be interwoven with the second group of parallel threads to form a woven scrim. In an embodiment, the openings in the scrim have at least one dimension in the plane of the scrim being at least 1 mm, preferably at least 2 mm, more preferably 5 mm.

The tufted carpet comprising the material for a primary carpet backing according to any of the embodiments described above as a primary backing and pile yarns fixedly connected to the primary backing enables that the tufted carpet may be chemically recycled in a polyamide-6 recycling process. Preferably, the tufted carpet comprises at most 10 wt.% of polyester based on the total weight of the material for a primary carpet backing and the pile yarns, more preferably at most 6 wt.% of polyester. Preferably, the tufted carpet comprises at most 5 wt.% of polyester, more preferably at most 4 wt.%, most preferably at most 3 wt. % of polyester based on the total weight of the material for a primary carpet backing and the pile yarns, to enable that he tufted carpet can be chemically recycled in a process including the steps of depolymerisation of the polyamide-6 into its constituent monomers and repolymerization into polyamide-6, in particular when the pile yarns comprise a polyamide as a major component or consists of a polyamide, in particular a polyamide-6.

The object of the invention can further be achieved with a carpet tile comprising the material for a primary carpet backing according to any of the embodiments described above, and/or the tufted carpet according to any of the embodiments described above.

The carpet tile may further comprise a separation layer between the tufted primary carpet backing comprising pile yarns fixedly connected to the material for a primary carpet backing and an underlay construction to enable separation of the underlay construction from the material for a primary carpet backing and the pile yarns to improve the chemical recycling process.

### Examples

### Example 1

A material for a primary carpet backing was provided comprising a nonwoven fabric comprising four layers of fibers, the fibers having a linear density of 15 dtex.

The first layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The second layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The third layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The fourth layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The third layer of fibers is located directly adjacent to the first layer of fibers, the first layer of fibers is located directly adjacent to the fourth layer of fibers, and the fourth layer of fibers is located directly adjacent to the second layer of fibers.

The nonwoven fabric had a weight of 110 g/m².

### Example 2

A material for a primary carpet backing was provided comprising a nonwoven fabric comprising four layers of fibers, the fibers having a linear density of 15 dtex.

The first layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The second layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The third layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The fourth layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The third layer of fibers is located directly adjacent to the fourth layer of fibers, the fourth layer of fibers is located directly adjacent to the first layer of fibers, and the first layer of fibers is located directly adjacent to the second layer of fibers.

The nonwoven fabric had a weight of 110 g/m².

### Example 3

A material for a primary carpet backing was provided comprising a nonwoven fabric comprising four layers of fibers, the fibers having a linear density of 15 dtex.

The first layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The second layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The third layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The fourth layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The fourth layer of fibers is located directly adjacent to the third layer of fibers, the third layer of fibers is located directly adjacent to the first layer of fibers, and the first layer of fibers is located directly adjacent to the second layer of fibers.

The nonwoven fabric had a weight of 110 g/m².

### Example 4

A material for a primary carpet backing was provided comprising a nonwoven fabric comprising four layers of fibers, the fibers having a linear density of 15 dtex.

The first layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The second layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The third layer of fibers consisting of first bicomponent core/sheath filaments comprising a core of polyethylene terephthalate having a melting temperature of 250°C and a sheath of polypropylene having a melting temperature of 165°C and a Melt Flow Index of 25 g/10 min in a weight ratio of 80:20.

The fourth layer of fibers consisting of second bicomponent core/sheath filaments comprising a core of polyamide-6 having a melting temperature of 220°C and a sheath of polypropylene having a melting temperature of 165°C and a Melt Flow Index of 25 g/10 min in a weight ratio of 77:23.

The third layer of fibers is located directly adjacent to the fourth layer of fibers, the fourth layer of fibers is located directly adjacent to the second layer of fibers, and the second layer of fibers is located directly adjacent to the first layer of fibers.

The nonwoven fabric had a weight of 110 g/m².

### Comparative Example 1

A material for a primary carpet backing in accordance with EP 3009553 A1 was provided comprising a nonwoven fabric composed of four layers of fibers, the fibers having a linear density of 15 dtex, each layer of fibers consisting of bicomponent core/sheath filaments comprising a core of polyamide-6 and a sheath of polypropylene in a weight ratio of 77:23.

The nonwoven fabric had a weight of 110 g/m².

The materials for a primary carpet backing were tufted into a tufted carpet comprising the material for a primary carpet backing and pile yarns fixedly connected to the primary backing. The pile yarns were polyamide-6 pile yarns having a linear density of 2700 dtex. The tufted carpet comprised the pile yarns at a spacing of 1/10 of an inch in cross machine direction and with 50 pile yarns per 10 cm in machine direction.

The processing stability at 22°C of the material for a primary carpet backing is determined by applying a load of 30 kg/m in the machine direction onto the material for a carpet backing having a width of 50 cm and a length of 600 cm under wet conditions by spaying 200 ml of water on an area of 1 m², and is defined as the dimensional change in machine direction and in cross machine direction.

The processing stability at 100°C of the material for a primary carpet backing is determined by applying a load of 30 kg/m in the machine direction onto the material for a carpet backing having a width of 50 cm and a length of 600 cm and measure the dimensional change in machine and cross machine direction at 100°C under wet conditions by spaying 200 ml of water on an area of 1 m². The material for a primary carpet backing is heated up until a temperature of 100°C has been reached. After reaching 100°C, the material for a primary carpet backing is taken out of the oven. The processing stability is defined as the dimensional change in machine direction and in cross machine direction, and is determined directly after material for a primary carpet backing is removed from the oven.

The free shrinkage of a tufted carpet comprising the material for a primary carpet backing and pile yarns fixedly connected to the primary backing is determined by heating a tufted carpet, having a width of 50 cm and a length of 50 cm, in an oven at 100°C for 15 minutes and measuring the dimensional change in machine and cross machine direction.

**Table 1: Processing stability of materials for a primary carpet backing and free shrinkage of tufted carpets comprising the material for a primary carpet backing and pile yarns fixedly connected to the primary backing.**

| | | Comparative Example | Example | | | |
|---|---|---|---|---|---|---|
| | | 1 | 1 | 2 | 3 | 4 |
| Processing stability at 22°C | MD | 3.7% | 1.9% | 2.1% | 1.9% | 2.4% |
| | CMD | -5.4% | -3.4% | -3.7% | -3.3% | -3.6% |
| Processing stability at 100°C | MD | 5.5% | 4.2% | 4.5% | 4.1% | 4.6% |
| | CMD | -14.9% | -10.2% | -11.0% | -9.6% | -10.6% |
| Free shrinkage at 100°C | MD | -1.6% | -1.4% | -1.3% | -1.3% | -1.3% |
| | CMD | -1.3% | -1.3% | -1.3% | -1.2% | -1.1% |

The material for a primary carpet backing according to examples 1 to 4 have a significantly improved processing stability at a load of 30 kg/m at 22°C, i.e. exhibit less dimensional change, both in machine direction (MD) and in cross machine direction (CMD), than comparative example 1.

The material for a primary carpet backing according to examples 1 to 4 have a significantly improved processing stability at a load of 30 kg/m at 100°C after being wetted, i.e. exhibit less dimensional change, both in machine direction (MD) and in cross machine direction (CMD), than comparative example 1.

The material for a primary carpet backing according to examples 1 to 4 have a free shrinkage which is improved in comparison to comparative example 1, at least in machine direction.

The material for a primary carpet backing according to examples 1 and 3 have an even further improved processing stability at a load of 30 kg/m at 22°C, i.e. exhibit less dimensional change, both in machine direction (MD) and in cross machine direction (CMD), in comparison to examples 2 and 4.

The material for a primary carpet backing according to examples 1 and 3 have an even further improved processing stability at a load of 30 kg/m at 100°C after being wetted, i.e. exhibit less dimensional change, both in machine direction (MD) and in cross machine direction (CMD), in comparison to examples 2 and 4.

The material for a primary carpet backing according to example 3 comprises a symmetrical build-up in the order of the layers of fibers regarding first bicomponent core/sheath fibers and second bicomponent core/sheath fibers, thereby preventing, or at least reducing, the risk of dishing or doming of carpet tiles comprising the material for a primary carpet backing due to differences shrinkage effects and/or expansion effects between the individual layers of fibers, in comparison to example 1.

Although the material for a primary carpet backing is primarily suitable to be used as a primary carpet backing, the material may also be used as a carrier for (cushioned) vinyl floor coverings, for filtration media, for roofing underlayment sheets, or bitumen roofing membranes.

## Claims

1. A material for a primary carpet backing comprising a nonwoven fabric comprising first bicomponent core/sheath fibers comprising a first thermoplastic polymer in the core and a second thermoplastic polymer in the sheath and second bicomponent core/sheath fibers comprising a third thermoplastic polymer in the core and a fourth thermoplastic polymer in the sheath, wherein the first thermoplastic polymer in the core of the first bicomponent core/sheath fibers is of a different polymer family as the third thermoplastic polymer in the core of the second bicomponent core/sheath fibers, and wherein the second thermoplastic polymer in the sheath of the first bicomponent core/sheath fibers and the fourth thermoplastic polymer in the sheath of the second bicomponent core/sheath fibers are polymers of the same polymer family, preferably having essentially the same melting temperature.

2. The material for a primary carpet backing according to claim 1, wherein the second thermoplastic polymer in the sheath of the first bicomponent core/sheath fibers and the fourth thermoplastic polymer in the sheath of the second bicomponent core/sheath fibers are identical polymers.

3. The material for a primary carpet backing according to any of claims 1 to 2 wherein the second thermoplastic polymer in the sheath of the first bicomponent core/sheath fibers is a polyolefin, preferably a polypropylene and the fourth thermoplastic polymer in the sheath of the second bicomponent core/sheath fibers is a polyolefin, preferably a polypropylene.

4. The material for a primary carpet backing according to any of claims 1 to 3 wherein the first thermoplastic polymer in the core of the first bicomponent core/sheath fibers is a polyester, preferably a polyethylene terephthalate, and the third thermoplastic polymer in the core of the second bicomponent core/sheath fibers is a polyamide, preferably a polyamide-6.

5. The material for a primary carpet backing according to any of claims 1 to 2 wherein the second thermoplastic polymer is a polyamide, preferably a polyamide-6 and the fourth thermoplastic polymer is a polyamide, preferably a polyamide-6.

6. The material for a primary carpet backing according to any of claims 1 to 2 or 4 to 5 wherein the first thermoplastic polymer is a polyester, preferably a polyethylene terephthalate, and the third thermoplastic polymer is a polyolefin, preferably a polypropylene.

7. The material for a primary carpet backing according to any of claims 1 to 6 wherein the nonwoven fabric comprises a first layer of fibers comprising first bicomponent core/sheath fibers, and a second layer of fibers comprising second bicomponent core/sheath fibers.

8. The material for a primary carpet backing according to claim 7 wherein the nonwoven fabric comprises a third layer of fibers comprising first bicomponent core/sheath fibers, and/or a fourth layer of fibers comprising second bicomponent core/sheath fibers.

9. The material for a primary carpet backing according to claim 8 wherein the third layer of fibers comprising first bicomponent core/sheath fibers is located directly adjacent to the first layer of fibers comprising first bicomponent core/sheath fibers.

10. The material for a primary carpet backing according to any of claims 8 or 9 wherein the first layer of fibers and/or the third layer of fibers is located between the second layer of fibers and the fourth layer of fibers.

11. The material for a primary carpet backing according to claim 8 wherein the second layer of fibers and/or the fourth layer of fibers is located between the first layer of fibers and the third layer of fibers.

12. A tufted carpet comprising the material for a primary carpet backing according to any of the previous claims as a primary backing and pile yarns fixedly connected to the primary backing.

13. The tufted carpet according to claim 12 wherein the pile yarns comprise polyamide polymer, preferably a polyamide-6 polymer, as a major component.

14. A carpet tile comprising the material for a primary carpet backing according to any of claims 1 to 11, and/or the tufted carpet according to any of claims 12 to 13.

15. A method for manufacturing a material for a primary carpet backing according to any of claims 1 to 11 comprising the steps of providing first bicomponent core/sheath fibers comprising a first thermoplastic polymer in the core and a second thermoplastic polymer in the sheath, providing second bicomponent core/sheath fibers comprising a third thermoplastic polymer in the core and a fourth thermoplastic polymer in the sheaths, wherein the first thermoplastic polymer in the core of the first bicomponent core/sheath fibers is of a different polymer family as the third thermoplastic polymer in the core of the second bicomponent core/sheath fibers, and wherein the second thermoplastic polymer in the sheath of the first bicomponent core/sheath fibers and the fourth thermoplastic polymer in the sheath of the second bicomponent core/sheath fibers are polymers of the same polymer family, preferably having essentially the same melting temperature, and forming the first bicomponent core/sheath fibers and the second bicomponent core/sheath fibers into a nonwoven fabric.

## Patentansprüche

1. Material für eine primäre Teppichunterlage, umfassend einen Vliesstoff, umfassend erste Kern/Mantel-Bikomponentenfasern, umfassend ein erstes thermoplastisches Polymer im Kern und ein zweites thermoplastisches Polymer im Mantel, und zweite Kern/Mantel-Bikomponentenfasern, umfassend ein drittes thermoplastisches Polymer im Kern und ein viertes thermoplastisches Polymer im Mantel, wobei das erste thermoplastische Polymer im Kern der ersten Kern/Mantel-Bikomponentenfasern aus einer anderen Polymerfamilie stammt als das dritte thermoplastische Polymer im Kern der zweiten Kern/Mantel-Bikomponentenfasern, und wobei das zweite thermoplastische Polymer im Mantel der ersten Kern/Mantel-Bikomponentenfasern und das vierte thermoplastische Polymer im Mantel der zweiten Kern/Mantel-Bikomponentenfasern Polymere der gleichen Polymerfamilie sind, die vorzugsweise im Wesentlichen die gleiche Schmelztemperatur aufweisen.

2. Material für eine primäre Teppichunterlage nach Anspruch 1, wobei das zweite thermoplastische Polymer im Mantel der ersten Kern/Mantel-Bikomponentenfasern und das vierte thermoplastische Polymer im Mantel der zweiten Kern/Mantel-Bikomponentenfasern identische Polymere sind.

3. Material für eine primäre Teppichunterlage nach einem der Ansprüche 1 bis 2, wobei das zweite thermoplastische Polymer im Mantel der ersten Kern/Mantel-Bikomponentenfasern ein Polyolefin, vorzugsweise ein Polypropylen, ist und das vierte thermoplastische Polymer im Mantel der zweiten Kern/Mantel-Bikomponentenfasern ein Polyolefin, vorzugsweise ein Polypropylen, ist.

4. Material für eine primäre Teppichunterlage nach einem der Ansprüche 1 bis 3, wobei das erste thermoplastische Polymer im Kern der ersten Kern/Mantel-Bikomponentenfasern ein Polyester, vorzugsweise ein Polyethylenterephthalat, ist und das dritte thermoplastische Polymer im Kern der zweiten Kern/Mantel-Bikomponentenfasern ein Polyamid, vorzugsweise ein Polyamid-6, ist.

5. Material für eine primäre Teppichunterlage nach einem der Ansprüche 1 bis 2, wobei das zweite thermoplastische Polymer ein Polyamid, vorzugsweise ein Polyamid-6, ist und das vierte thermoplastische Polymer ein Polyamid, vorzugsweise ein Polyamid-6, ist.

6. Material für eine primäre Teppichunterlage nach einem der Ansprüche 1 bis 2 oder 4 bis 5, wobei das erste thermoplastische Polymer ein Polyester, vorzugsweise ein Polyethylenterephthalat, ist und das dritte thermoplastische Polymer ein Polyolefin, vorzugsweise ein Polypropylen, ist.

7. Material für eine primäre Teppichunterlage nach einem der Ansprüche 1 bis 6, wobei der Vliesstoff eine erste Faserschicht, umfassend erste Kern/Mantel-Bikomponentenfasern, und eine zweite Faserschicht umfasst, umfassend zweite Kern/Mantel-Bikomponentenfasern.

8. Material für eine primäre Teppichunterlage nach Anspruch 7, wobei der Vliesstoff eine dritte Faserschicht, umfassend erste Kern/Mantel-Bikomponentenfasern, und/oder eine vierte Faserschicht umfasst, umfassend zweite Kern/Mantel-Bikomponentenfasern.

9. Material für eine primäre Teppichunterlage nach Anspruch 8, wobei sich die dritte Faserschicht, umfassend erste Kern/Mantel-Bikomponentenfasern, direkt neben der ersten Faserschicht befindet, umfassend erste Kern/Mantel-Bikomponentenfasern.

10. Material für eine primäre Teppichunterlage nach einem der Ansprüche 8 oder 9, wobei sich die erste Faserschicht und/oder die dritte Faserschicht zwischen der zweiten Faserschicht und der vierten Faserschicht befindet.

11. Material für eine primäre Teppichunterlage nach Anspruch 8, wobei sich die zweite Faserschicht und/oder die vierte Faserschicht zwischen der ersten Faserschicht und der dritten Faserschicht befindet.

12. Getufteter Teppich, umfassend das Material für eine primäre Teppichunterlage nach einem der vorstehenden Ansprüche als eine primäre Teppichunterlage sowie Florgarne, die fest mit der primären Teppichunterlage verbunden sind.

13. Getufteter Teppich nach Anspruch 12, wobei die Florgarne als einen Hauptbestandteil ein Polyamidpolymer, vorzugsweise ein Polyamid-6-Polymer, umfassen.

14. Teppichfliese, umfassend das Material für eine primäre Teppichunterlage nach einem der Ansprüche 1 bis 11, und/oder den getufteten Teppich nach einem der Ansprüche 12 bis 13.

15. Verfahren zum Herstellen eines Materials für eine primäre Teppichunterlage nach einem der Ansprüche 1 bis 11, umfassend die Schritte zum Bereitstellen erster Kern/Mantel-Bikomponentenfasern, umfassend ein erstes thermoplastisches Polymer im Kern und ein zweites thermoplastisches Polymer im Mantel, Bereitstellen zweiter Kern/Mantel-Bikomponentenfasern, umfassend ein drittes thermoplastisches Polymer im Kern und ein viertes thermoplastisches Polymer in den Mänteln, wobei das erste thermoplastische Polymer im Kern der ersten Kern/Mantel-Bikomponentenfasern aus einer anderen Polymerfamilie stammt als das dritte thermoplastische Polymer im Kern der zweiten Kern/Mantel-Bikomponentenfasern, und wobei das zweite thermoplastische Polymer im Mantel der ersten Kern/Mantel-Bikomponentenfasern und das vierte thermoplastische Polymer im Mantel der zweiten Kern/Mantel-Bikomponentenfasern Polymere der gleichen Polymerfamilie sind, die vorzugsweise im Wesentlichen die gleiche Schmelztemperatur aufweisen, und die ersten Kern/Mantel-Bikomponentenfasern und die zweiten Kern/Mantel-Bikomponentenfasern zu einem Vliesstoff formen.

## Revendications

1. Matériau pour un dos de tapis primaire comprenant un tissu non tissé comprenant des premières fibres cœur/gaine à deux composants comprenant un premier polymère thermoplastique dans le cœur et un deuxième polymère thermoplastique dans la gaine et des secondes fibres cœur/gaine à deux composants comprenant un troisième polymère thermoplastique dans le cœur et un quatrième polymère thermoplastique dans la gaine, dans lequel le premier polymère thermoplastique dans le cœur des premières fibres cœur/gaine à deux composants est d'une famille de polymères différente du troisième polymère thermoplastique dans le cœur des secondes fibres cœur/gaine à deux composants, et dans lequel le deuxième polymère thermoplastique dans la gaine des premières fibres cœur/gaine à deux composants et le quatrième polymère thermoplastique dans la gaine des secondes fibres cœur/gaine à deux composants sont des polymères de la même famille de polymères, présentant de préférence sensiblement la même température de fusion.

2. Matériau pour un dos de tapis primaire selon la revendication 1, dans lequel le deuxième polymère thermoplastique dans la gaine des premières fibres cœur/gaine à deux composants et le quatrième polymère thermoplastique dans la gaine des secondes fibres cœur/gaine à deux composants sont des polymères identiques.

3. Matériau pour un dos de tapis primaire selon l'une quelconque des revendications 1 à 2 dans lequel le deuxième polymère thermoplastique dans la gaine des premières fibres cœur/gaine à deux composants est une polyoléfine, de préférence un polypropylène et le quatrième polymère thermoplastique dans la gaine des secondes fibres cœur/gaine à deux composants est une polyoléfine, de préférence un polypropylène.

4. Matériau pour un dos de tapis primaire selon l'une quelconque des revendications 1 à 3 dans lequel le premier polymère thermoplastique dans le cœur des premières fibres cœur/gaine à deux composants est un polyester, de préférence un téréphtalate de polyéthylène, et le troisième polymère thermoplastique dans le cœur des secondes fibres cœur/gaine à deux composants est un polyamide, de préférence un polyamide-6.

5. Matériau pour un dos de tapis primaire selon l'une quelconque des revendications 1 à 2 dans lequel le deuxième polymère thermoplastique est un polyamide, de préférence un polyamide-6 et le quatrième polymère thermoplastique est un polyamide, de préférence un polyamide-6.

6. Matériau pour un dos de tapis primaire selon l'une quelconque des revendications 1 à 2 ou 4 à 5 dans lequel le premier polymère thermoplastique est un polyester, de préférence un polyéthylène téréphtalate, et le troisième polymère thermoplastique est une polyoléfine, de préférence un polypropylène.

7. Matériau pour un dos de tapis primaire selon l'une quelconque des revendications 1 à 6 dans lequel le tissu non tissé comprend une première couche de fibres comprenant des premières fibres cœur/gaine à deux composants , et une deuxième couche de fibres comprenant des secondes fibres cœur/gaine à deux composants.

8. Matériau pour un dos de tapis primaire selon la revendication 7 dans lequel le tissu non tissé comprend une troisième couche de fibres comprenant des premières fibres cœur/gaine à deux composants, et/ou une quatrième couche de fibres comprenant des secondes fibres cœur/gaine à deux composants.

9. Matériau pour un dos de tapis primaire selon la revendication 8 dans lequel la troisième couche de fibres comprenant des premières fibres cœur/gaine à deux composants est située directement adjacente à la première couche de fibres comprenant des premières fibres cœur/gaine à deux composants.

10. Matériau pour un dos de tapis primaire selon l'une quelconque des revendications 8 ou 9 dans lequel la première couche de fibres et/ou la troisième couche de fibres est/sont située(s) entre la deuxième couche de fibres et la quatrième couche de fibres.

11. Matériau pour un dos de tapis primaire selon la revendication 8 dans lequel la deuxième couche de fibres et/ou la quatrième couche de fibres est/sont située(s) entre la première couche de fibres et la troisième couche de fibres.

12. Tapis tufté comprenant le matériau pour un dos de tapis primaire selon l'une quelconque des revendications précédentes en tant que dos primaire et des fils constituant le velours reliés de manière fixe au dos primaire.

13. Tapis tufté selon la revendication 12 dans lequel les fils constituant le velours comprennent un polymère de polyamide, de préférence un polymère de polyamide-6, en tant que composant majeur.

14. Dalle de tapis comprenant le matériau pour un dos de tapis primaire selon l'une quelconque des revendications 1 à 11, et/ou le tapis tufté selon l'une quelconque des revendications 12 à 13.

15. Procédé de fabrication d'un matériau pour un dos de tapis primaire selon l'une quelconque des revendications 1 à 11 comprenant les étapes de fourniture de premières fibres cœur/gaine à deux composants comprenant un premier polymère thermoplastique dans le cœur et un deuxième polymère thermoplastique dans la gaine, de fourniture de secondes fibres cœur/gaine à deux composants comprenant un troisième polymère thermoplastique dans le cœur et un quatrième polymère thermoplastique dans les gaines, dans lequel le premier polymère thermoplastique dans le cœur des premières fibres cœur/gaine à deux composants est d'une famille de polymères différente du troisième polymère thermoplastique dans le cœur des secondes fibres cœur/gaine à deux composants, et dans lequel le deuxième polymère thermoplastique dans la gaine des premières fibres cœur/gaine à deux composants et le quatrième polymère thermoplastique dans la gaine des secondes fibres cœur/gaine à deux composants sont des polymères de la même famille de polymères, présentant de préférence sensiblement la même température de fusion, et formant les premières fibres cœur/gaine à deux composants et les secondes fibres cœur/gaine à deux composants en un tissu non tissé.
